# FASCICULE DE BREVET EUROPEEN

(11) **EP 4 010 654 B1**
(45) Date de publication et mention de la délivrance du brevet: **06.09.2023**
(21) Numéro de dépôt: 20749899.9
(22) Date de dépôt: 31.07.2020
(51) Int. Cl.: F41H 5/04, C04B 35/563, C04B 35/565

(54) **BLINDAGE EN CARBURE DE BORE ET EN CARBURE DE SILICIUM**
PANZERUNG BESTEHEND AUS BORCARBID UND SILICIUMCARBID
ARMOR CONSISTING OF SILICON CARBIDE AND BORON CARBIDE

(30) Priorité: 05.08.2019 FR 1908958
(43) Date de publication de la demande: 15.06.2022
(73) Titulaire: SAINT-GOBAIN CENTRE DE RECHERCHES ET D'ETUDES EUROPEEN, 92400 Courbevoie (FR)
(72) Inventeur: BRULIN, Jérôme, 13310 Saint-Martin-de-Crau (FR); SANT, Jérôme, 30133 Les Angles (FR)
(74) Mandataire: Saint-Gobain Recherche
(86) Numéro de dépôt international: PCT/EP2020/071719
(87) Numéro de publication internationale: WO 2021/023671

(56) Documents cités:
- EP-A1- 2 998 282
- US-A- 3 796 564
- US-B2- 6 862 970

## Description

L'invention se rapporte à des produits dont les propriétés antibalistiques sont suffisamment élevées pour justifier leur utilisation dans des éléments d'armures ou de blindage.

L'invention trouve notamment son application comme élément d'armures ou de blindage permettant de protéger des personnes, des véhicules (terrestres, maritimes ou aériens) ou des installations fixes (bâtiment, mur d'enceinte, poste de garde notamment).

En particulier, la masse supplémentaire liée au port d'un blindage est un élément essentiel qu'il s'agisse de la protection des personnes mais aussi vis à vis des véhicules, pour lesquels un alourdissement excessif est un obstacle aux déplacements rapides et limite leur rayon d'action.

On connaît en particulier des systèmes formés par l'assemblage dit « mosaïque » de pièces céramiques ayant une forme polygonale déterminée et résistants individuellement à l'impact d'un projectile. JP2005247622 décrit par exemple un arrangement de telles formes de 20 à 100 mm de largeur, pour une épaisseur de quelques mm. Ce type de mosaïques de pièces présente l'avantage de résister à des tirs successifs (protection dite « multi-shot » ou « multi-hit » en anglais) .

Il existe d'autres systèmes dits monolithiques, c'est à dire formés par une seule pièce ou encore par un nombre très limité de pièces de grande surface, chaque monolithe ayant une surface d'impact supérieure à 100 cm², de façon à réduire le nombre de joints.

De nombreux matériaux ont été proposés pour constituer une armure destinée aux personnes dont le rapport masse de blindage sur surface de protection doit rester faible, typiquement moins de 50 kg/m², ou un blindage non personnel destiné à des véhicules ou des installations fixes dont le rapport masse sur surface de protection (ou densité surfacique) est supérieur typiquement à 50 kg/m².

Les métaux et l'alumine sont couramment utilisés comme blindage mais ils présentent une densité surfacique élevée.

Plus récemment ont été proposés des produits à base de céramique non oxyde dont le rapport masse sur surface de blindage ou densité surfacique à résistance à l'impact équivalente est plus faible.

On connaît par exemple de US4604249 ou US4415632 des produits poreux de SiC utilisables comme blindage.

On connaît aussi des armures en un matériau céramique composite formé de grains fins de carbure de bore liés par une matrice de carbure de silicium obtenue par frittage réactif, en particulier par imprégnation de silicium fondu. Le brevet US3796564 puis US3857744 ou IL188517 dévoilent par exemple des méthodes de fabrication d'armure composite de B4C lié de façon réactive (« reaction bonded B4C » en anglais) consistant, à presser une pièce à partir d'un mélange de grains de B4C de 1 à 120 micromètres et de la résine ou un précurseur de carbone, puis à infiltrer cette pièce avec du Silicium fondu entre 1440 et 2200°C sous vide ou sous atmosphère inerte. Le produit final est un composite comprenant des grains de carbure de bore dans une matrice de silicium incluant du carbure de silicium obtenu par réaction d'une partie du silicium fondu avec le carbure de bore et le carbone de la résine.
Ce type de produit est difficile à fabriquer car le procédé d'élaboration est complexe. Notamment du fait de la forte réaction du silicium fondu avec les grains de B₄C d'une part (conduisant en particulier à une phase secondaire de carbure de bore de type **B**₁₂**(B,C,Si)**₃) et avec le carbone libre d'autre part (conduisant en particulier à une phase de type β-**SiC).** Il a été proposé plus récemment par US2013/0168905A1 d'infiltrer la préforme avec du silicium et du bore. D'autres brevets, comme par exemple, US6609452B1 ou US6862970B2, ont proposé d'autres solutions mais il s'agit d'armures comprenant des grains de SiC liés par une phase métallique de silicium. Les performances balistiques de ce type de composite à densité surfacique similaire sont apparues plus faibles qu'un composite à grains de B₄C liés par une phase métallique de silicium.

Il existe donc continuellement un besoin d'amélioration des produits utilisés comme blindage, cette amélioration étant mesurée notamment par leur performance balistique. L'objet de la présente invention est donc de proposer un matériau de carbure de bore lié par une matrice comprenant essentiellement du silicium métallique ou un alliage de silicium métallique et des grains de carbure de silicium, dont les performances balistiques sont améliorées.

En particulier, il existe aujourd'hui un besoin pour un blindage capable de résister à la perforation vis-à-vis de projectiles ayant une forte énergie cinétique tout en présentant une masse volumique apparente faible, typiquement inférieure à 3,1 g/cm³, voire inférieure à 3,0 g/cm³, afin de protéger des personnes ou des véhicules (terrestres, maritimes voire aériens) voire des installations fixes, telles que des bâtiments.

Selon un premier aspect général, la présente invention se rapporte à un élément de blindage antibalistique, présentant de préférence une surface d'impact, en particulier plane et/ou courbe, et comprenant un corps céramique constitué dans un matériau qualifié de dur. Le corps céramique est généralement muni sur sa face intérieure ou opposée à la face d'impact d'un revêtement arrière de dissipation de l'énergie, de préférence constitué dans un matériau de dureté inférieure à celui du matériau constituant le corps céramique.

Plus précisément, la présente invention selon la revendication 1 se rapporte à un élément de blindage antibalistique, comprenant un corps céramique constitué dans un matériau comprenant, en pourcentage volumique :
- entre 20% et 75% de carbure de bore,
- entre 5% et 30% d'une phase métallique de silicium ou d'une phase métallique comprenant du silicium,
- entre 20% et 70% de carbure de silicium,
et dans lequel en pourcentage volumique dudit matériau:
- plus de 60% des grains dont le diamètre équivalent est supérieur à 60 micromètres sont des grains de carbure de bore,
- les grains de carbure de bore dont le diamètre équivalent est supérieur à 30 micromètres représentent plus de 25%, voire plus de 27%,
- les grains de carbure de silicium dont le diamètre équivalent est supérieur ou égal à 10 micromètres représentent plus de 10%,
- les grains de carbure de silicium dont le diamètre équivalent est inférieur à 10 micromètres représentent plus de 10%, de préférence plus de 15%,
- les grains de carbure de silicium dont le diamètre équivalent est supérieur ou égal à 60 micromètres représentent moins de 10% en volume dudit matériau. L'invention se rapporte également à un procédé de fabrication du corps céramique de l'élément de blindage selon la revendication 19 ainsi qu'à l'utilisation d'un tel élément de blindage selon la revendication 20.

Selon l'invention, la phase métallique est avantageusement présente entre les grains de carbure de bore et de carbure de silicium. Comme indiqué précédemment, la phase métallique comprend du silicium et de préférence encore est à base de silicium. En particulier elle comprend de préférence plus de 50% atomique de silicium, de préférence plus de 80% voire même plus de 90% d'atomes de silicium. De préférence encore la phase métallique est constituée essentiellement de silicium, voire est constituée uniquement de silicium, aux impuretés inévitables près.

Selon la présente invention, le matériau céramique constituant le corps céramique n'est en principe pas poreux. Cependant, selon certaines réalisation, ledit matériau peut présenter une porosité qui n'excède pas en principe 5% en volume, voire qui n'excède pas 1% en volume, calculée selon le rapport exprimé en pourcentage de la masse volumique apparente mesurée selon ISO18754 sur la masse volumique absolue mesurée selon ISO5018. La porosité est égale à 100-R(%) où R(%) est le rapport exprimé en pourcentage de la masse volumique apparente sur la masse volumique absolue.

Quelles que soit la porosité du matériau, selon la présente invention, les pourcentages volumiques en les différents constituants du matériau sont donnés hors porosité.

Les teneurs en carbure de bore, en carbure de silicium et phase métallique de silicium ou en phase(s) métallique(s) contenant du silicium dans le matériau sont obtenues par diffraction des rayons, selon les techniques bien connues de l'art.

Par carbure de bore, on entend la somme de toutes les formes cristallines détectables, notamment par diffraction des rayons X, présentes dans le matériau et comprenant du bore et du carbone, en particulier bien entendu le B₄C mais également d'autres formes notamment issues de sa décomposition à haute température, comme la forme B₁₂(B,C,Si)₃.

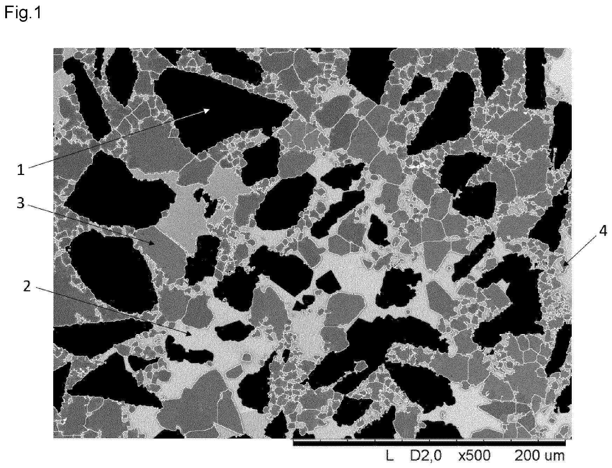

Le diamètre équivalent de grain dans le matériau selon l'invention, on entend le diamètre d'une sphère de même volume que celui mesuré pour ledit grain. Il est de préférence déterminé par microtomographie. L'analyse par tomographie permet également d'obtenir la distribution volumique des grains, en pourcentage du volume de matériau analysé, comme illustré par la figure 1 et expliqué plus en détail dans la suite de la description.

Dans l'élément de blindage selon l'invention, selon des caractéristiques préférées de la présente invention:
- ledit corps céramique est monolithique et présente une surface d'impact supérieure à 100 cm², une épaisseur supérieure à 3 mm et une masse volumique apparente inférieure à 3,0 g/cm³,
- ledit matériau constituant le corps céramique comprend des grains de carbure de bore liés par une matrice, ladite matrice comprenant a) une phase métallique de silicium ou une phase métallique comprenant du silicium, notamment sous la forme d'un alliage du silicium avec un ou plusieurs autres éléments métalliques et b) des grains de carbure de silicium,
- lesdits grains de carbure de bore dont le diamètre équivalent est supérieur ou égal à 30 micromètres représentent plus 20% en volume, de préférence plus de 25% en volume dudit matériau, voir plus de 27% et
- lesdits grains de carbure de silicium dont le diamètre équivalent est supérieur ou égal à 10 micromètres représentent plus 10% en volume dudit matériau, et
- lesdits grains de carbure de silicium dont le diamètre équivalent est inférieur à 10 micromètres représentent plus de 10% en volume, de préférence plus de 15% en volume dudit matériau,
- les grains de carbure de silicium dont le diamètre équivalent est supérieur ou égal à 10 micromètres et inférieur à 60 micromètres représentent plus 10% du volume dudit matériau, de préférence plus de 13% du volume du matériau,
- les grains de carbure de silicium dont le diamètre équivalent est supérieur à 60 micromètres représentent moins de 5%, de préférence moins de 2% voire moins de 1% du volume dudit matériau,
- les grains de carbure de silicium dont le diamètre équivalent est supérieur ou égal à 10 micromètres et inférieur à 60 micromètres représentent moins de 25% de préférence encore moins de 20% du volume dudit matériau,
- les grains de carbure de silicium dont le diamètre équivalent est inférieur à 10 micromètres représentent moins de 55%, de préférence encore moins de 50% du volume dudit matériau,
- les grains de carbure de bore dont le diamètre équivalent est inférieur ou égal à 5 micromètres représentent moins de 10% en volume dudit matériau, de préférence moins de 5% en volume dudit matériau, voire moins de 1% du volume dudit matériau,
- les grains de carbure de silicium dont le diamètre équivalent est inférieur à 5 micromètres, notamment sous forme cristallographique alpha (a), représentent plus de 10% en volume dudit matériau, et de préférence encore plus de 15%, ou même plus de 20%, voire plus de 25% en volume dudit matériau,
- les grains de carbure de silicium dont le diamètre équivalent est supérieur ou égal à 60 micromètres représentent moins de 10% en volume dudit matériau, de préférence moins de 5% en volume dudit matériau, voire moins de 1% du volume dudit matériau,
- les grains de carbure de silicium dont le diamètre équivalent est supérieur à 5 micromètres sont constitués essentiellement de SiC sous forme alpha,
- les grains, notamment de carbure de bore ou de carbure de silicium, dans le matériau constituant le corps céramique présentent un diamètre équivalent inférieur à 150 micromètres, de préférence inférieur à 100 micromètres,
- plus de 90% en volume des grains dudit matériau dont le diamètre équivalent est supérieur à 60 micromètres sont des grains de carbure de bore,
- la phase métallique de silicium ou d'une phase métallique comprenant du silicium est essentiellement constituée de silicium (Si),
- la teneur volumique en carbure de silicium dans ledit matériau, mesurée par diffraction aux rayons X, est supérieure à 25%, de préférence encore supérieure à 30%, de préférence supérieure à 40% des phases cristallisées présentes dans ledit matériau,
- la teneur volumique en carbure de silicium dans ledit matériau, mesurée par diffraction aux rayons X, est inférieure à 70%, de préférence inférieure à 65% des phases cristallisées présentes dans ledit matériau,
- la teneur volumique en carbure de bore dans ledit matériau, mesurée par diffraction aux rayons X, est supérieure à 25%, voire même supérieure ou égale à 27%, des phases cristallisées présentes dans ledit matériau constitutif du corps céramique,
- la teneur volumique en carbure de bore dans ledit matériau, mesurée par diffraction aux rayons X, est inférieure à 60%, de préférence inférieure à 50%, voire inférieure à 40%, des phases cristallisées présentes dans ledit matériau,
- la teneur volumique en silicium métallique ou en phase métallique comprenant du silicium, mesurée par diffraction aux rayons X, est supérieure à 5%, de préférence supérieure à 10%, des phases cristallisées présentes dans ledit matériau,
- la teneur en silicium métallique ou en phase métallique comprenant du silicium, mesurée par diffraction aux rayons X, est inférieure ou égale à 25%, voire inférieure à 20% en volume des phases cristallisées présentes dans ledit matériau,
- Le carbure de bore, le carbure de silicium et le silicium métallique ou en phase métallique comprenant du silicium représentent ensemble plus de 50%, de préférence plus de 70%, de préférence encore plus de 80%, voire plus de 90%, en volume, des phases cristallisées présentes dans ledit matériau,
- ledit matériau constituant le corps céramique présente une porosité (telle que mesurée comme le rapport exprimé en pourcentage de la masse volumique apparente mesurée par ISO18754 (cf page 22) sur la masse volumique absolue mesurée selon ISO5018), inférieure à 3%, de préférence encore inférieure à 2% ou même inférieure à 1%,
- ledit corps céramique présente une masse volumique apparente inférieure à 2,95 g/cm³,
- ledit corps céramique présente une surface supérieure à 150 cm², supérieure à 500 cm², ou encore supérieure à 1000 cm²,
- ledit corps céramique présente une épaisseur supérieure à 4 mm, de préférence encore supérieure à 5 mm et/ou inférieure à 50mm, de préférence inférieure à 30mm,
- le corps céramique présente un ratio masse sur surface ou densité surfacique, mesuré(e) en kg/m², inférieur(e) à 100, de préférence inférieur à 50,
- le corps céramique peut présenter une surface plane ou une surface avec une ou plusieurs courbures. Le corps céramique peut être une forme simple ou complexe, pleine ou présenter une cavité, telle que par exemple un tube. De préférence, le corps céramique est choisi parmi une plaque, un plastron, un casque, un élément de carrosserie d'un véhicule, un tube.

Selon des configurations particulières de l'élément de blindage selon l'invention ayant donné de bons résultats aux tests balistiques, en volume dudit matériau :
- la teneur en carbure de silicium (SiC) dudit matériau, est supérieure à 30% et inférieure à 70%, de préférence encore est supérieure à 40%, voire supérieure à 45% et inférieure à 65%,
- la teneur en carbure de bore est supérieure à 20% et inférieure à 50%, de préférence encore est supérieure à 25% et inférieure à 40%,
- la teneur en silicium métallique ou en la phase métallique comprenant du silicium est supérieure à 8% et inférieure à 25%, de préférence encore est supérieure à 10% et inférieure à 20%,
- les grains de carbure de bore dont le diamètre équivalent est supérieur à 30 micromètres représentent plus de 20% et moins de 50%, et de préférence encore représentent plus de 25% et moins de 40%,
- les grains de carbure de silicium dont le diamètre équivalent est compris entre 10 micromètres et 60 micromètres représentent plus de 10% et moins de 20%, et de préférence encore représentent plus de 10% et moins de 19%,
- les grains de carbure de silicium dont le diamètre équivalent est inférieur à 10 micromètres représentent plus de 25% et moins de 60%, et de préférence encore représentent plus de 30% et moins de 55%,
- les grains de carbure de bore dont le diamètre équivalent est supérieur à 60 micromètres représentent plus de 15% et moins de 30%,
- plus de 80%, de préférence encore plus de 90% des grains dont le diamètre équivalent est supérieur à 60 micromètres sont des grains de carbure de bore.

L'élément de blindage antibalistique, présentant une surface d'impact, en particulier plane et/ou courbe, comprenant un corps céramique constitué dans un matériau dur tel que décrit précédemment, muni sur sa face intérieure ou opposée à la face d'impact d'un revêtement arrière de dissipation de l'énergie, de préférence constitué dans un matériau de dureté inférieure à celui du matériau constituant le corps céramique.
- le matériau constituant le revêtement arrière est choisi parmi les polyéthylènes PE, notamment les polyéthylènes ultra haute densité (UHMPE), les fibres de verre ou de carbone, les aramides, les métaux tel que l'aluminium, le titane ou leur alliages ou l'acier,
- l'ensemble corps céramique-revêtement arrière est entouré par une enveloppe d'un matériau de confinement,
- le matériau constituant l'enveloppe est choisi parmi les polyéthylènes PE, notamment les polyéthylènes ultra haute densité (UHMPE), les fibres de verre ou de carbone, les aramides, les métaux tel que l'aluminium ou l'acier.

Selon un mode de réalisation préféré de l'invention, le corps céramique est monolithique sous forme de plaque et présente une surface supérieure à 100 cm² et une épaisseur supérieure à 3 mm, une masse volumique apparente inférieure à 3,0 g/cm³, constitué d'un matériau tel que décrit précédemment.

L'invention se rapporte également selon la revendication 20 à l'utilisation d'un l'élément de blindage comprenant corps céramique dont les caractéristiques viennent d'être décrites précédemment, comme protection antibalistique d'une personne, d'un véhicule (terrestre, maritime ou aérien) ou d'une installation fixe (bâtiment, mur d'enceinte, poste de garde notamment).

Sans qu'il soit besoin ici de répéter, par mesure de concision, l'ensemble des caractéristiques techniques déjà décrites précédemment en relation avec la plage de blindage, un corps céramique selon l'invention couvre bien entendu l'ensemble des mêmes modes préférés.

On donne les indications et définitions suivantes, en relation avec la description précédente de la présente invention :
Par matériau dur il est notamment entendu un matériau céramique de dureté Vickers supérieure à 15 GPa mesurée par exemple selon ASTM C1327, lui conférant notamment des propriétés antibalistiques.

Par diamètre équivalent de grain dans le matériau selon l'invention, on entend le diamètre d'une sphère de même volume que celui mesuré pour ledit grain. Il est de préférence déterminé par microtomographie.
Par exemple, un échantillon de dimensions 1.5×1.5×8mm³ est scanné dans un tomographe nanofoyer de manière à rapprocher au maximum l'échantillon de la source et ainsi obtenir une haute résolution de l'ordre de 1 µm³/voxel. Un temps d'acquisition d'environ 3h permet d'obtenir une reconstruction peu bruitée. L'image volumique obtenue constituée de différents niveaux de gris est binarisée, par exemple à l'aide d'un logiciel IMorph, afin d'individualiser les grains, la phase métallique et la porosité éventuelle. L'identification des grains peut être aussi réalisée par des techniques telles qu'un microscope électronique à balayage par analyse en électrons rétrodiffusés ou par spectroscopie à rayons X à dispersion d'énergie (ou EDS, abréviation de l'anglais « *Energy Dispersive X-ray Spectroscopy* »).
A partir du volume de chaque grain, il est possible de réaliser une distribution volumique des grains en pourcentage du volume de matériau analysé (hormis sa porosité). Il est aussi possible de calculer le volume de la phase métallique en pourcentage du volume de matériau analysé.

Dans la présente demande, le pourcentage volumique de grains est exprimé par rapport au volume de matériau à l'exclusion de sa porosité.

Par masse volumique apparente d'un produit, on entend au sens de la présente invention, le rapport égal à la masse du produit divisée par le volume qu'occupe ledit produit. Elle est classiquement déterminée par la méthode d'Archimède. La norme ISO 5017 ou ISO18754 précisent par exemple les conditions d'une telle mesure. Cette norme permet aussi de mesurer la porosité ouverte au sens de la présente invention.

Par « matrice » du corps céramique, on entend une phase cristallisée ou non, assurant une structure sensiblement continue entre les grains et obtenue, lors du frittage ou de la cuisson, à partir des constituants de la charge de départ et éventuellement des constituants de l'environnement gazeux de cette charge de départ. Une matrice entoure sensiblement les grains de la fraction granulaire, c'est-à-dire les enrobe.

Dans un corps céramique fritté selon l'invention, les grains liés par la matrice présentent un diamètre équivalent supérieur ou égal à 60 µm sont essentiellement, voire exclusivement, des grains de carbure de bore. Notamment, selon l'invention les grains de carbure de bore peuvent représenter de préférence plus de 75%, plus de 80%, voire plus de 90% en volume des grains présentant un diamètre équivalent supérieur ou égal à 60 µm.

Lors du frittage, ils conservent sensiblement la forme et la nature chimique qu'ils présentaient dans la charge de départ. Dans le corps céramique fritté, la matrice et les grains représentent ensemble 100% de la masse du produit.

Une matrice obtenue par frittage réactif présente des particularités. Notamment, lors du frittage réactif, il se produit une carburation du métal d'infiltration. L'augmentation de volume qui en résulte, typiquement de 1 à 30%, permet avantageusement de compenser le retrait occasionné par le frittage des grains. L'infiltration de silicium ou de ses alliages permettant aussi de combler la porosité de la préforme crue.

La composition en phases du matériau constituant le corps céramique monolithique est normalement obtenue par diffraction des rayons X et analyse de Rietveld.

Par «contenant un», «comprenant un» ou «comportant un», on entend «comportant au moins un», sauf indication contraire.

Sauf indication contraire, dans la présente description, tous les pourcentages sont des pourcentages massiques.

Le produit selon l'invention permet notamment une protection contre tout type de projectiles, par exemple une balle, un obus, une mine ou un élément projeté lors de la détonation d'explosifs, comme des boulons, des clous (ou IED pour «Improvised Explosive Device») et constitue normalement un élément d'armure pour les personnes ou les véhicules, généralement sous forme de modules comme des plaques.

Selon l'invention, l'élément de protection comprend classiquement au moins deux couches : une première pièce en céramique telle que décrite précédemment associée à un autre matériau moins dur et préférentiellement ductile, en face arrière, classiquement appelé « backing », tel que des fibres de polyéthylène (ex : Tensylon^{™}, Dyneema^{®}, Spectra^{™}), d'aramide (ex :Twaron^{™}, Kevlar^{®}), des fibres de verre, ou des métaux comme par exemple l'acier ou les alliages d'aluminium, sous la forme de plaques. Des colles, par exemple à base de polyuréthane ou polymères époxyde, sont utilisées pour lier les différents éléments constituant la plaque de blindage.

Sous l'impact des projectiles, le matériau céramique se fragmente et a pour rôle principal de briser les noyaux des projectiles. Le rôle de la face arrière, associée au matériau céramique constituant le corps céramique, est de consommer l'énergie cinétique des débris et de maintenir un certain niveau de confinement sur la plaque de céramique, optimisé encore par l'enveloppe de confinement.

L'invention se rapporte également selon la revendication 19 à un procédé de fabrication du corps céramique de l'élément de blindage comprenant les étapes suivantes :
a) préparation d'une charge de départ comportant :
   - au moins une poudre de particules de carbure de bore, dont le diamètre médian des particules est compris entre 30 micromètres et 150 micromètres,
   - une première poudre de particules de carbure de silicium, dont le diamètre médian de la première poudre de particules est au moins 1,5 fois inférieur au diamètre médian de grains de carbure de bore et de préférence moins de 3,5 fois inférieur au diamètre médian de grains de carbure de bore.
   - une deuxième poudre de particules de carbure de silicium, dont le diamètre médian est au moins 5 fois inférieur au diamètre médian de la première poudre de particules de carbure de silicium, et de préférence moins de 15 fois inférieur au diamètre médian de la première poudre de particules de carbure de silicium
   - un solvant aqueux, en particulier de l'eau déionisée,
   - optionnellement, un précurseur de carbone, de préférence, une poudre de graphite ou de carbone non cristallisé ou amorphe,
   - de préférence des additifs de mise en forme,
b) mise en forme de la charge de départ sous la forme d'une préforme,
c) démoulage après durcissement ou séchage,
d) optionnellement, séchage de la préforme, de préférence de manière jusqu'à ce que l'humidité résiduelle soit comprise entre 0 et 0,5% en poids,
e) chargement dans un four de la préforme au contact d'une source de silicium ou d'un alliage de silicium, de préférence sous forme solide,
f) cuisson de la préforme sous atmosphère inerte, de préférence sous argon, ou sous vide, de préférence sous une pression résiduelle inférieure à 20 torrs, de préférence inférieure à 15 torrs de préférence à une température comprise entre 1450°C et 2200°C, de manière à infiltrer la préforme avec la source de silicium en fusion et consolider la dite préforme.

De préférence, le diamètre médian des particules la poudre initiale de carbure de bore est compris entre 40 et 90 micromètres et de manière plus préférée est compris entre 50 et 80 micromètres.
De préférence, le diamètre médian de la première poudre de particules de carbure de Silicium est au moins deux fois inférieur au diamètre médian de la poudre de grains de carbure de bore.

Dans un tel procédé, on utilise une première poudre initiale de carbure de silicium dont le diamètre médian des particules est compris entre 10 micromètres et 50 micromètres, et de préférence est compris entre 15 et 30 micromètres. Dans certains modes de réalisation avantageux, cette première poudre de carbure de silicium présente au moins 10% de grains supérieurs à 5 micromètres et moins de 10% de grains supérieurs à 50 micromètres.
De préférence, le diamètre médian de la deuxième poudre de particules de carbure de Silicium est au moins dix fois inférieur au diamètre médian de la première poudre de particules de carbure de silicium.
De préférence, le diamètre médian des particules de la deuxième poudre de carbure de silicium est compris entre 0,5 micromètres et 5 micromètres, et de préférence est compris entre 1 et 4 micromètres, de manière plus préférée entre 2 et 3 micromètres.

Selon un mode préféré, la charge de départ comprend en masse :
- de 30 à 50% d'une poudre de grains de carbure de bore, dont le diamètre médian est compris entre 40 et 90 micromètres et de préférence compris entre 50 et 80 micromètres, et
- de 10 à 30% d'une première poudre de grains de carbure de silicium, dont le diamètre médian est compris entre 10 micromètres et 50 micromètres et de préférence compris entre 15 et 30 micromètres
- de 30 à 50% d'une deuxième poudre de grains de carbure de silicium, dont le diamètre médian est compris entre 0,5 micromètres et 5 micromètres, et de préférence compris entre 1 et 4 micromètres, de manière plus préférée entre 2 et 3 micromètres.

Selon un mode préféré, la charge de départ comprend en masse moins de 5% d'un précurseur de carbone, de préférence, une poudre de graphite ou de carbone non cristallisé ou amorphe.

Selon un mode préféré, l'ajout d'additifs et de précurseurs de carbone est tel que la teneur en carbone libre de la préforme avant cuisson, c'est à dire la teneur en carbone non lié sous forme d'un carbure, mesurable par exemple selon la norme ANSI B74-151992 (R2000), est inférieure à 10%, de préférence inférieure à 5% de la masse de ladite préforme.

A l'étape b), la préforme peut être obtenue par coulage ou par pressage de la charge ou du mélange dans un moule, avec ou sans vibration, de préférence par coulage.

Pendant la cuisson à l'étape f), la source de silicium en fusion infiltre la préforme et réagit (« frittage réactif ») avec certains de ses constituants, en particulier avec le carbone présent du fait des impuretés ou des apports volontaires, pour former une matrice métallique et ainsi lier les grains de carbure de bore et les grains de carbure de silicium du corps céramique.

Selon un mode particulier, la température maximale de cuisson de la préforme est comprise entre 1450 et 1800°C sous vide.

Selon un autre mode particulier, la température maximale de cuisson de la préforme est comprise entre 1700 et 2200°C, de préférence entre 1700 et 1900°C sous une pression normale de gaz inerte ou neutre, par exemple sous argon.

Dans le corps céramique selon l'invention les grains de céramique, de préférence des grains de carbure de silicium et de bore peuvent être liés par une matrice comprenant ou constituée essentiellement par une phase de de silicium sans ajout d'autres composés.

Le diamètre médian des particules (ou la « taille » médiane) des particules constituant une poudre, est donnée au sens de la présente invention par une caractérisation de distribution granulométrique, en particulier au moyen d'un granulomètre laser. La caractérisation de distribution granulométrique est réalisée classiquement avec un granulomètre laser conformément à la norme ISO 13320-1. Le granulomètre laser peut être, par exemple, un Partica LA-950 de la société HORIBA. Au sens de la présente description et sauf mention contraire, le diamètre médian des particules désigne respectivement le diamètre des particules au-dessous duquel se trouve 50% en masse de la population. On appelle « diamètre médian » ou « taille médiane » d'un ensemble de particules, en particulier d'une poudre, le percentile D₅₀, c'est-à-dire la taille divisant les particules en première et deuxième populations égales en volume, ces première et deuxième populations ne comportant que des particules présentant une taille supérieure, ou inférieure respectivement, à la taille médiane.

Dans un mode de réalisation, la charge de départ contient un liant et/ou un lubrifiant et/ou un agent tensioactif et/ou un agent dispersant. Dans un mode de réalisation, la charge de départ contient un liant et un dispersant.

Le mélange est effectué de manière à obtenir une bonne homogénéité de distribution des différents éléments, le temps de mélange pouvant être adapté pour atteindre ce résultat.

De préférence, le mélange des réactifs initiaux s'effectue dans un broyeur à jarre, le temps de mélange étant supérieur à 15 heures. Un temps de mélange de 24 heures est bien adapté. Lorsque le mélange est obtenu, celui peut être atomisé ou granulé, par exemple par «freeze granulation», afin d'obtenir des granules qui seront mises en forme, par exemple par pressage afin d'obtenir une préforme en céramique. D'autres techniques de mise en forme peuvent être utilisées, comme l'injection, le coulage en barbotine. Après mise en forme, la préforme peut être usinée.

De préférence, les poudres de carbure de silicium ou et poudres de carbure de bore présentent une teneur en élément oxygène inférieure à 2%, de préférence inférieure à 1,6%, de préférence inférieure à 1,4%, de préférence inférieure à 1,2%, de préférence inférieure à 1%, voire inférieure à 0,7%, voire inférieure à 0,5%, voire même inférieure à 0,3% poids. Dans un mode de réalisation, la teneur en élément oxygène de ces poudres peut être diminuée avant utilisation par toute technique connue de l'homme du métier, comme par exemple un lavage à l'acide.

On appelle « frittage » un traitement thermique par lequel le produit forme une microstructure constituée d'un granulat ou d'une fraction granulaire dont les grains sont solidarisés au moyen d'une matrice. Un produit fritté selon l'invention comporte une matrice contenant au moins une phase de silicium métallique ou un alliage de silicium métallique, obtenue par frittage sous atmosphère neutre ou sous vide.

Par impuretés on entend les constituants inévitables, introduits involontairement et nécessairement avec les matières premières ou résultants de réactions avec ces constituants. Les impuretés ne sont pas des constituants nécessaires, mais seulement tolérés. Une telle impureté est en particulier constituée par la silice, l'oxyde de bore, le fer ou ses oxydes. Sans sortir du cadre de l'invention, il est possible de limiter l'impureté silice en lavant les poudres de SiC voire d'additif de frittage dans une étape préalable et/ou en ajoutant au mélange initial des additifs contenant du carbone, pour l'éliminer pendant le frittage.

La figure 1 est une image prise au microscope à balayage d'une section polie du matériau dur de l'exemple 1 selon l'invention. Le matériau dur comprend des grains de carbure de bore 1, liés par une matrice comprenant une phase de silicium métallique 2, dans laquelle on distingue une première fraction intermédiaire de grains de carbure de silicium 3 et une deuxième fraction de grains de de carbure de silicium 4.

### Exemples :

Les exemples qui suivent sont donnés à titre purement illustratif et ne limitent sous aucun des aspects décrits la portée de la présente invention.

Dans tous les exemples qui suivent, des pièces céramiques sous la forme de plaques de format 100mm×100mm d'épaisseur 7 à 10 mm ont été initialement réalisées par coulage en moule plâtre d'une suspension selon le procédé décrit précédemment et les formulations décrites dans le tableau 1 ci-après. Après coulage et durcissement de la pâte, les pièces ont été démoulées puis séchées 24h à 110°C. Les pièces ont ensuite été introduites dans un four pour une cuisson à 1700°C sous vide, à une pression inférieure à 20 torrs. L'apport de silicium a été réalisé à partir d'une poudre placée au contact des pièces crues lors de l'enfournement. La quantité de silicium représentant environ 45% de la masse crue sèche des pièces. L'exemple comparatif 6 représentatif a été selon l'enseignement de l'exemple 1 du brevet US6862970B2. La cuisson pour cet exemple a été réalisée à 1550°C par différence aux autres exemples.

Pour chaque réalisation, les caractéristiques du corps céramique et la composition des différents matériaux le constituant sont rassemblées dans le tableau 2.

Pour chaque exemple, huit plaques céramiques obtenues selon le procédé décrit précédemment ayant une densité surfacique de 22,5 Kg/m² (± 0,5 Kg/m²) ont été collées sur des plaques métalliques d'aluminium 7020 T6 de 200mm×200mm×5mm.
La densité surfacique ρₐ est calculée selon la formule suivante ρₐ = t× ρᵥ où :
ρₐ est la densité surfacique exprimée en Kg/m² -t est l'épaisseur de la plaque, exprimée en mm ρᵥ est la masse volumique apparente exprimée en Kg/dm³ typiquement mesurée selon la norme ISO 18754.

Chaque assemblage céramique-métal a été exposé à un tir d'une distance de 15 mètre avec une munition de 7.62×51 P80 (steel core) selon différentes vitesses. Un graphe représentant le niveau d'impact ou de perforation (protection totale à perforation complète) en fonction de la vitesse d'impact pour tous les exemples. A partir de ce graphe, il est déterminé pour chaque exemple la vélocité médiane V50 à partir de laquelle la probabilité de perforation est de 50%. Une vélocité supérieure à 700 m/s compte tenu de ce type de munition est considérée comme satisfaisante. Une vélocité élevée correspond à une performance balistique d'autant plus élevée que la densité surfacique est faible.

Les propriétés balistiques de la plaque de blindage finale sont rassemblées dans le tableau 3.

Les résultats sont reportés dans les tableaux suivants :

**Tableau 11**

| | invention exemple 1 | invention exemple 2 | invention exemple 3 | comparatif exemple 1 | comparatif exemple 2 | comparatif exemple 3 | comparatif exemple 4 | comparatif exemple 5 | comparatif exemple 6 |
|---|---|---|---|---|---|---|---|---|---|
| Composition du mélange initial (% massique) | | | | | | | | | |
| Poudre B4C | 41 | 30 | 41 | 25 | 30 | 70 | 0 | 0 | 46,3 |
| D₅₀ = 70 µm | | | | | | | | | |
| D₁₀= 47 µm | | | | | | | | | |
| D₉₀= 105µm | | | | | | | | | |
| Poudre B4C | 0 | 0 | 0 | 0 | 0 | 0 | 30 | 0 | 0 |
| D₅₀ = 5µm | | | | | | | | | |
| Poudre SiC | 0 | 0 | 0 | 0 | 15 | 0 | 15 | 45 | 0 |
| D₅₀ = 80µm | | | | | | | | | |
| D₁₀= 53 µm | | | | | | | | | |
| D₉₀= 120µm | | | | | | | | | |
| Poudre SiC | 15 | 15 | 30 | 20 | 0 | 27 | 0 | 0 | 0 |
| D₅₀ = 27µm | | | | | | | | | |
| D₁₀= 18 µm | | | | | | | | | |
| D₉₀= 40 µm | | | | | | | | | |
| Poudre SiC | 0 | 0 | 0 | 0 | 0 | 0 | 0 | 0 | 46,3 |
| D₅₀ = 13 µm | | | | | | | | | |
| D₁₀= 8,5 µm | | | | | | | | | |
| D₉₀= 17,5 µm | | | | | | | | | |
| Poudre SiC | 41 | 50 | 26 | 50 | 50 | 0 | 55 | 50 | 0 |
| 0,1-5µm | | | | | | | | | |
| D₅₀ = 25 µm | | | | | | | | | |
| D₁₀= 0.5 µm | | | | | | | | | |
| D₉₀= 7 µm | | | | | | | | | |
| % de carbone ajouté (fructose) | 0 | 0 | 0 | 0 | 0 | 0 | 0 | 0 | 7,4 |
| Poudre graphite | 3 | 5 | 3 | 5 | 5 | 3 | 0 | 5 | 0 |
| D₅₀ = 0,7µm | | | | | | | | | |
| D₁₀= 0.4 µm | | | | | | | | | |
| D₉₀= 10 µm | | | | | | | | | |
| total minéraux % | 100 | 100 | 100 | 100 | 100 | 100 | 100 | 100 | 100 |
| eau ajoutée % par rapport à la masse de minéraux | 18 | 18 | 18 | 18 | 18 | 18 | 18 | 18 | 26 |
| Liant + dispersant ajoutés | 0,5 | 0,5 | 0,5 | 0,5 | 0,5 | 0,5 | 0,5 | 0,5 | 0,5 |

**[Tableau 2]**

| | | Inv. exemple 1 | Inv. exemple 2 | Inv. exemple 3 | Comp. exemple 1 | Comp. exemple 2 | Comp. exemple 3 | Comp. exemple 4 | Comp. exemple 5 | Comp. exemple 6 |
|---|---|---|---|---|---|---|---|---|---|---|
| **Caractéristiques corps / matériau céramique après cuisson** | | | | | | | | | | |
| Caractéristiques microstructurales (% volumique du produit hors porosité) | | | | | | | | | | |
| Fraction de grains* de carbure de bore ≥30µm | | 35 | 28 | 34 | 24 | 39 | 52 | <1 | <1 | 43 |
| Fraction de grains* de carbure de bore <5µm | | <1 | <1 | <1 | <1 | <1 | <1 | 19 | <1 | <1 |
| Fraction de grains* de carbure de bore ≥60µm | | 23 | 19 | 22 | 15 | 26 | 35 | 0 | 0 | 28 |
| Pourcentage volumique de grains de carbure de bore parmi les grains ≥60µm | | 99 | 99 | 99 | 99 | 72 | 99 | 0 | 0 | 99 |
| Fraction de grains* de carbure de silicium ≥60µm | | <1 | <1 | <1 | <1 | 10 | <1 | 8 | 35 | <1 |
| Fraction de grains* de carbure de silicium ≥10µm et <60µm | | 13 | 14 | 25 | 19 | <1 | 13 | 2 | 7 | 28 |
| Fraction de grains* de carbure de silicium <10µm | | 35 | 47 | 21 | 47 | 40 | 10 | 36 | 46 | 9 |
| Fraction de grains* SiC a <5µm | | 30 | 40 | 18 | 40 | 34 | <1 | 31 | 39 | <1 |
| Porosité % | | <1 | <1 | <1 | <1 | <1 | <1 | <1 | <1 | <1 |
| masse volumique apparente g/cm³ | | 2,82 | 2,92 | 2,82 | 2,95 | 2,87 | 2,63 | 2,81 | 3,10 | 2,73 |

| | Analyse diffraction aux rayons X (% volumique) | | | | | | | | | |
|---|---|---|---|---|---|---|---|---|---|---|
| Carbure de silicium SiC (formes a et β) | | 48 | 61 | 46 | 65 | 53 | 23 | 46 | 88 | 37 |
| Phases de carbure de bore, en particulier B₄C et B₁₂(B,C,Si)₃ | | 35 | 28 | 34 | 23 | 39 | 52 | 36 | 0 | 43 |
| Si métallique | | 17 | 11 | 20 | 12 | 9 | 25 | 18 | 12 | 20 |

**[Tableau 31**

| | Inv. exemple 1 | Inv. exemple 2 | Inv. exemple 3 | Comp. exemple 1 | Comp. exemple 2 | Comp. exemple 3 | Comp. exemple 4 | Comp. exemple 5 | Comp. exemple 6 |
|---|---|---|---|---|---|---|---|---|---|
| **Essais balistiques** | | | | | | | | | |
| Vélocité médiane V₅₀ (m/s) pour une densité surfacique de 22,5 kg/dm² | 800 | 780 | 760 | 740 | 730 | 700 | 750 | 760 | 730 |

Les résultats regroupés dans le tableau 3 indiquent que le choix des matériaux utilisés pour fabriquer un élément de blindage c'est-à-dire dont les fractions volumiques de grains de carbure de bore, de grains de carbure de silicium et de la phase métallique à base de silicium sont conforme à la présente invention, conduisent à une performance antibalistique améliorée (Vélocité V₅₀ plus élevée, à densité surfacique égale).

## Revendications

1. Elément de blindage antibalistique, comprenant un corps céramique constitué dans un matériau comprenant, en pourcentage volumique :
- entre 20% et 75% de carbure de bore,
- entre 5% et 30% d'une phase métallique de silicium ou d'une phase métallique comprenant du silicium,
- entre 20% et 70% de carbure de silicium,
et dans lequel en pourcentage volumique :
- plus de 60% des grains dont le diamètre équivalent est supérieur à 60 micromètres sont des grains de carbure de bore,
- les grains de carbure de bore dont le diamètre équivalent est supérieur à 30 micromètres représentent plus de 25%,
- les grains de carbure de silicium dont le diamètre équivalent est supérieur ou égal à 10 micromètres représentent plus de 10%,
- les grains de carbure de silicium dont le diamètre équivalent est inférieur à 10 micromètres représentent plus de 10%, de préférence plus de 15%,
- les grains de carbure de silicium dont le diamètre équivalent est supérieur ou égal à 60 micromètres représentent moins de 10% en volume dudit matériau.

2. Elément de blindage selon la revendication 1, dans lequel ledit corps céramique est monolithique et présente une surface d'impact supérieure à 100 cm², une épaisseur supérieure à 3 mm et une masse volumique apparente inférieure à 3,0 g/cm³.

3. Elément de blindage selon l'une des revendications précédentes, dans lequel les grains de carbure de silicium dont le diamètre équivalent est supérieur ou égal à 10 micromètres et inférieur à 60 micromètres représentent plus de 10% en volume dudit matériau, et de préférence moins de 50% en volume dudit matériau.

4. Elément de blindage selon l'une des revendications précédentes, dans lequel les grains de carbure de silicium dont le diamètre équivalent est inférieur à 10 micromètres représentent moins de 55% en volume dudit matériau.

5. Elément de blindage selon l'une des revendications précédentes, dans lequel les grains de carbure de silicium dont le diamètre équivalent est supérieur ou égal à 60 micromètres représentent moins de 5% en volume dudit matériau.

6. Elément de blindage selon l'une des revendications précédentes, comprenant :
- des grains de carbure de bore,
- une matrice liant lesdits grains de carbure de bore,
- ladite matrice comprenant au moins a) une phase métallique de silicium ou une phase métallique comprenant du silicium et b) des grains de carbure de silicium.

7. Elément de blindage selon l'une des revendications précédentes, dans lequel les grains de carbure de bore dont le diamètre équivalent est inférieur ou égal à 5 micromètres représentent moins de 10% en volume dudit matériau.

8. Elément de blindage selon l'une des revendications précédentes, dans lequel les grains de carbure de silicium dont le diamètre équivalent est inférieur à 5 micromètres, sous forme cristallographique alpha (a), représentent au moins 20%, de préférence au moins 25% en volume dudit matériau.

9. Elément de blindage selon l'une des revendications précédentes, dans lequel les grains de carbure de bore dont le diamètre équivalent est supérieur à 60 micromètres représentent plus 15%, de préférence plus de 20%, et/ou moins de 40%, de préférence moins de 35%, de préférence moins de 30%, en volume dudit matériau.

10. Elément de blindage selon l'une des revendications précédentes, dans lequel la teneur en carbure de silicium dudit matériau, est supérieure à 30% et/ou inférieure à 65% en volume dudit matériau.

11. Elément de blindage selon l'une des revendications précédentes, dans lequel la teneur en carbure de bore, est supérieure à 25%, de préférence supérieure à 30%, voire même supérieure ou égale à 35% et/ou inférieure à 60% en volume dudit matériau.

12. Elément de blindage selon l'une des revendications précédentes, dans lequel le carbure de bore, le carbure de silicium et le silicium métallique ou la phase métallique comprenant du silicium, représentent ensemble plus de 75%, en volume, dudit matériau.

13. Elément de blindage selon l'une des revendications précédentes, dans lequel, en volume dudit matériau:
- la teneur en carbure de silicium dudit matériau, est supérieure à 30% et inférieure à 70%, de préférence encore est supérieure à 40% et inférieure à 65%, et
- la teneur en carbure de bore est supérieure à 20% et inférieure à 50%, de préférence encore est supérieure à 25% et inférieure à 40%, et
- la teneur en silicium métallique ou en la phase métallique comprenant du silicium est supérieure à 8% et inférieure à 25%, de préférence encore est supérieure à 10% et inférieure à 20%, et
- les grains de carbure de bore dont le diamètre équivalent est supérieur à 30 micromètres représentent plus de 20% et moins de 50%, et de préférence encore représentent plus de 25% et moins de 40%, et
- les grains de carbure de silicium dont le diamètre équivalent est compris entre 10 micromètres et 60 micromètres représentent plus de 10% et moins de 20%, et de préférence encore représentent plus de 10% et moins de 19%, et
- les grains de carbure de silicium dont le diamètre équivalent est inférieur à 10 micromètres représentent plus de 25% et moins de 60%, et de préférence encore représentent plus de 30% et moins de 55%, et
- les grains de carbure de silicium dont le diamètre équivalent est inférieur à 5 micromètres représentent moins de 5%, et de préférence encore représentent moins de 1%,
- les grains de carbure de bore dont le diamètre équivalent est supérieur à 60 micromètres représentent plus de 15% et moins de 30%, et
- plus de 80%, de préférence encore plus de 90% des grains dont le diamètre équivalent est supérieur à 60 micromètres sont des grains de carbure de bore.

14. Elément de blindage selon l'une des revendications précédentes, dans lequel le corps céramique présente un ratio masse sur surface, ou densité surfacique, mesuré(e) en kg/m², inférieur(e) à 100.

15. Elément de blindage selon l'une des revendications précédentes, dans lequel le corps céramique est choisi parmi une plaque, un plastron, un casque, un élément de carrosserie d'un véhicule, un tube.

16. Elément de blindage selon l'une des revendications précédentes, comprenant un corps céramique constitué dans un matériau, muni sur sa face intérieure ou opposée à la face d'impact d'un revêtement arrière de dissipation de l'énergie, constitué dans un matériau de dureté inférieure à celui du matériau constituant le corps céramique, dans lequel le matériau constituant le revêtement arrière est choisi parmi les polyéthylènes PE, notamment les polyéthylènes ultra haute densité (UHMPE), les fibres de verre ou de carbone, les aramides, les métaux tel que l'aluminium, le titane ou leur alliages ou l'acier.

17. Elément de blindage selon la revendication précédente, dans laquelle l'ensemble corps céramique- revêtement arrière est entouré par une enveloppe d'un matériau de confinement.

18. Elément de blindage selon la revendication précédente, dans lequel le matériau constituant l'enveloppe est choisi parmi les polyéthylènes PE, notamment les polyéthylènes ultra haute densité (UHMPE), les fibres de verre ou de carbone, les aramides, les métaux tel que l'aluminium ou l'acier.

19. Procédé de fabrication du corps céramique de l'élément de blindage selon l'une des revendications précédentes comprenant les étapes suivantes :
a) préparation d'une charge de départ comportant :
- au moins une poudre de particules de carbure de bore, dont le diamètre médian des particules est compris entre 30 micromètres et 150 micromètres,
- une première poudre de particules de carbure de silicium, dont le diamètre médian de la première poudre de particules est au moins 1,5 fois inférieur au diamètre médian de grains de carbure de bore.
- une deuxième poudre de particules de carbure de silicium, dont le diamètre médian est au moins 5 fois inférieur au diamètre médian de la première poudre de particules de carbure de silicium,
- un solvant aqueux, en particulier de l'eau déionisée,
- optionnellement, un précurseur de carbone, de préférence, une poudre de graphite ou de carbone non cristallisé ou amorphe,
- de préférence, des additifs de mise en forme,
b) mise en forme de la charge de départ sous la forme d'une préforme,
c) démoulage après durcissement ou séchage,
d) optionnellement, séchage de la préforme, de préférence de manière jusqu'à ce que l'humidité résiduelle soit comprise entre 0 et 0,5% en poids,
e) chargement dans un four de la préforme au contact d'une source de silicium ou d'un alliage de silicium, de préférence sous forme solide,
f) cuisson de la préforme sous atmosphère inerte, de préférence sous argon, ou sous vide, de préférence sous une pression résiduelle inférieure à 20 torrs, préférence à une température comprise entre 1450°C et 2200°C, de manière à infiltrer la préforme avec la source de silicium en fusion et la consolider.

20. Utilisation de l'élément de blindage selon la revendication 1 à 18, comme protection antibalistique d'une personne ou d'un véhicule terrestre, maritime ou aérien ou d'une installation fixe comme un bâtiment, un mur d'enceinte, ou un poste de garde , en particulier sous la forme d'une plaque, d'une tuile, d'une mosaïque, par exemple sous forme d'hexagones ou de nodules, d'un plastron, d'un bouclier, d'un casque, d'un élément de carrosserie d'un véhicule tel que qu'une porte, d'un siège, d'un tube.

## Patentansprüche

1. Antiballistisches Panzerungselement, umfassend einen Keramikkörper, der aus einem Material besteht, umfassend, in Volumenprozent:
- zwischen 20 % und 75 % Borcarbid,
- zwischen 5 % und 30 % einer Siliciummetallphase oder einer Metallphase, umfassend Silicium,
- zwischen 20 % und 70 % Siliciumcarbid,
und wobei in Volumenprozent:
- mehr als 60 % der Körner, deren Äquivalentdurchmesser größer als 60 Mikrometer ist, Borcarbidkörner sind,
- die Borcarbidkörner, deren Äquivalentdurchmesser größer als 30 Mikrometer ist, mehr als 25 % ausmachen,
- die Siliciumcarbidkörner, deren Äquivalentdurchmesser größer als oder gleich 10 Mikrometer ist, mehr als 10 % ausmachen,
- die Siliciumcarbidkörner, deren Äquivalentdurchmesser kleiner als 10 Mikrometer ist, mehr als 10 %, bevorzugt mehr als 15 % ausmachen,
- die Siliciumcarbidkörner, deren Äquivalentdurchmesser größer als oder gleich 60 Mikrometer ist, weniger als 10 Vol.-% des Materials ausmachen.

2. Panzerungselement nach Anspruch 1, wobei der Keramikkörper monolithisch ist und eine Aufpralloberfläche, die größer als 100 cm² ist, eine Dicke, die größer als 3 mm ist, und eine Schüttdichte, die kleiner als 3,0 g/cm³ ist, aufweist.

3. Panzerungselement nach einem der vorstehenden Ansprüche, wobei die Siliciumcarbidkörner, deren Äquivalentdurchmesser größer als oder gleich 10 Mikrometer und kleiner als 60 Mikrometer ist, mehr als 10 Vol.-% des Materials und bevorzugt weniger als 50 Vol.-% des Materials ausmachen.

4. Panzerungselement nach einem der vorstehenden Ansprüche, wobei die Siliciumcarbidkörner, deren Äquivalentdurchmesser kleiner als 10 Mikrometer ist, weniger als 55 Vol.-% des Materials ausmachen.

5. Panzerungselement nach einem der vorstehenden Ansprüche, wobei die Siliciumcarbidkörner, deren Äquivalentdurchmesser größer als oder gleich 60 Mikrometer ist, weniger als 5 Vol.-% des Materials ausmachen.

6. Panzerungselement nach einem der vorstehenden Ansprüche, umfassend:
- Borcarbidkörner,
- eine Matrix, die die Borcarbidkörner bindet,
- die Matrix umfassend mindestens a) eine Siliciummetallphase oder eine Metallphase, umfassend Silicium, und b) Siliciumcarbidkörner.

7. Panzerungselement nach einem der vorstehenden Ansprüche, wobei die Borcarbidkörner, deren Äquivalentdurchmesser kleiner als oder gleich 5 Mikrometer ist, weniger als 10 Vol.-% des Materials ausmachen.

8. Panzerungselement nach einem der vorstehenden Ansprüche, wobei die Siliciumcarbidkörner, deren Äquivalentdurchmesser kleiner als 5 Mikrometer ist, in einer kristallographischen Form alpha (α) mindestens 20 Vol.-%, bevorzugt mindestens 25 Vol.-% des Materials ausmachen.

9. Panzerungselement nach einem der vorstehenden Ansprüche, wobei die Borcarbidkörner, deren Äquivalentdurchmesser größer als 60 Mikrometer ist, mehr als 15 Vol.-%, bevorzugt mehr als 20 Vol.-%, und/oder weniger als 40 Vol.-%, bevorzugt weniger als 35 Vol.-%, bevorzugt weniger als 30 Vol.-% des Materials ausmachen.

10. Panzerungselement nach einem der vorstehenden Ansprüche, wobei der Siliciumcarbidgehalt des Materials größer als 30 Vol.-% und/oder kleiner als 65 Vol.-% des Materials ist.

11. Panzerungselement nach einem der vorstehenden Ansprüche, wobei der Borcarbidgehalt größer als 25 Vol.-%, bevorzugt größer als 30 Vol.-%, sogar größer als oder gleich 35 Vol.-% und/oder kleiner als 60 Vol.-% des Materials ist.

12. Panzerungselement nach einem der vorstehenden Ansprüche, wobei das Borcarbid, das Siliciumcarbid und das metallische Silicium oder die metallische Phase, umfassend Silicium, zusammen mehr als 75 Vol.-% des Materials ausmachen.

13. Panzerungselement nach einem der vorstehenden Ansprüche, wobei, bezogen auf das Volumen des Materials:
- der Siliciumcarbidgehalt des Materials größer als 30 % und kleiner als 70 %, stärker bevorzugt größer als 40 % und kleiner als 65 % ist, und
- der Borcarbidgehalt größer als 20 % und kleiner als 50 % ist, stärker bevorzugt größer als 25 % und kleiner als 40 % ist, und
- der Gehalt an metallischem Silicium oder der metallischen Phase, umfassend Silicium, größer als 8 % und kleiner als 25 %, stärker bevorzugt größer als 10 % und kleiner als 20 % ist, und
- die Borcarbidkörner, deren Äquivalentdurchmesser größer als 30 Mikrometer ist, mehr als 20 % und weniger als 50 %, stärker bevorzugt mehr als 25 % und weniger als 40 % ausmachen, und
- die Siliciumcarbidkörner, deren Äquivalentdurchmesser zwischen 10 Mikrometern und 60 Mikrometern liegt, mehr als 10 % und weniger als 20 %, und stärker bevorzugt mehr als 10 % und weniger als 19 % ausmachen, und
- Siliciumcarbidkörner, deren Äquivalentdurchmesser kleiner als 10 Mikrometer ist, mehr als 25 % und weniger als 60 %, stärker bevorzugt mehr als 30 % und weniger als 55 % ausmachen, und
- die Siliciumcarbidkörner, deren Äquivalentdurchmesser kleiner als 5 Mikrometer ist, weniger als 5 % und stärker bevorzugt weniger als 1 % ausmachen,
- die Borcarbidkörner, deren Äquivalentdurchmesser größer als 60 Mikrometer ist, mehr als 15 % und weniger als 30 % ausmachen, und
- mehr als 80 %, stärker bevorzugt mehr als 90 % der Körner, deren Äquivalentdurchmesser größer als 60 Mikrometer ist, Borcarbidkörner sind.

14. Panzerungselement nach einem der vorstehenden Ansprüche, wobei der Keramikkörper ein Verhältnis von Masse zu Oberfläche oder Oberflächendichte, gemessen in kg/m², kleiner als 100 aufweist.

15. Panzerungselement nach einem der vorstehenden Ansprüche, wobei der Keramikkörper aus einer Platte, einem Brustpanzer, einem Helm, einem Karosserieelement eines Fahrzeugs, einem Rohr ausgewählt ist.

16. Panzerungselement nach einem der vorstehenden Ansprüche, umfassend einen Keramikkörper bestehend aus einem Material, der auf seiner Innenseite oder gegenüber der Aufprallfläche mit einer energiedissipativen rückseitigen Beschichtung versehen ist, die aus einem Material besteht, dessen Härte kleiner als die des Materials ist, aus dem der Keramikkörper besteht, wobei das Material, aus dem die rückseitige Beschichtung besteht, aus Polyethylen PE, insbesondere Polyethylen ultrahoher Dichte (UHMPE), Glas- oder Kohlenstofffasern, Aramiden, Metallen wie zum Beispiel Aluminium, Titan oder deren Legierungen oder Stahl ausgewählt ist.

17. Panzerungselement nach dem vorstehenden Anspruch, wobei die Baugruppe Keramikkörper - rückseitige Beschichtung durch eine Hülle aus einem Einschlussmaterial umgeben ist.

18. Panzerungselement nach dem vorstehenden Anspruch, wobei das Material, aus dem die Hülle besteht, aus Polyethylen PE, insbesondere Polyethylen ultrahoher Dichte (UHMPE), Glas- oder Kohlenstofffasern, Aramiden, Metallen wie zum Beispiel Aluminium oder Stahl ausgewählt ist.

19. Verfahren zum Herstellen des Keramikkörpers des Panzerungselements nach einem der vorstehenden Ansprüche, umfassend die folgenden Schritte:
a) Vorbereiten einer Ausgangsbeschickung, die vorweist:
- mindestens ein Pulver aus Borcarbidpartikeln, wobei der mittlere Partikeldurchmesser zwischen 30 Mikrometern und 150 Mikrometern liegt,
- ein erstes Pulver aus Siliciumcarbidpartikeln, wobei der mittlere Durchmesser des ersten Partikelpulvers mindestens 1,5-mal kleiner als der mittlere Durchmesser der Borcarbidkörner ist.
- ein zweites Pulver aus Siliciumcarbidpartikeln, wobei der mittlere Durchmesser mindestens 5-mal kleiner als der mittlere Durchmesser des ersten Pulvers aus Siliciumcarbidpartikeln ist,
- ein wässriges Lösungsmittel, insbesondere deionisiertes Wasser,
- optional einen Kohlenstoffvorläufer, bevorzugt ein Pulver aus Graphit oder aus nichtkristallisiertem oder amorphem Kohlenstoff,
- bevorzugt Formgebungszusätze,
b) Formen der Ausgangsbeschickung in die Form eines Vorformlings,
c) Entformen nach Aushärtung oder Trocknung,
d) optional Trocknen des Vorformlings, bevorzugt bis die Restfeuchte zwischen 0 und 0,5 Gew.-% liegt,
e) Beschicken in einem Ofen des Vorformlings in Kontakt mit einer Quelle von Silicium oder einer Siliciumlegierung, bevorzugt in fester Form,
f) Brennen des Vorformlings unter einer inerten Atmosphäre, bevorzugt unter Argon, oder unter Vakuum, bevorzugt unter einem Restdruck, der kleiner als 20 Torr ist, bevorzugt bei einer Temperatur zwischen 1450 °C und 2200 °C, um den Vorformling mit der Quelle von Siliciumschmelze zu infiltrieren und ihn zu verfestigen.

20. Verwendung des Panzerungselements nach Anspruch 1 bis 18 als antiballistischer Schutz einer Person oder eines Land-, Wasser- oder Luftfahrzeugs oder einer festen Einrichtung wie eines Gebäudes, einer Umfassungsmauer oder eines Wachpostens, insbesondere in Form einer Platte, eines Plättchens, eines Mosaiks, beispielsweise in Form von Sechsecken oder Knötchen, eines Brustpanzers, eines Schildes, eines Helms, eines Karosserieelements eines Fahrzeugs wie zum Beispiel einer Tür, eines Sitzes oder eines Rohrs.

## Claims

1. An antiballistic armor-plating component, comprising a ceramic body made of a material comprising, as percentages by volume:
- between 20% and 75% of boron carbide,
- between 5% and 30% of a metallic silicon phase or of a metallic phase comprising silicon,
- between 20% and 70% of silicon carbide,
and wherein, as percentages by volume:
- more than 60% of the grains with an equivalent diameter greater than 60 micrometers are boron carbide grains,
- the boron carbide grains with an equivalent diameter greater than 30 micrometers represent more than 25%,
- the silicon carbide grains with an equivalent diameter greater than or equal to 10 micrometers represent more than 10%,
- the silicon carbide grains with an equivalent diameter less than 10 micrometers represent more than 10%, preferably more than 15%,
- the silicon carbide grains with an equivalent diameter greater than or equal to 60 micrometers represent less than 10% by volume of said material.

2. The armor-plating component as claimed in claim 1, wherein said ceramic body is monolithic and has an impact area greater than 100 cm², a thickness greater than 3 mm and a bulk density less than 3.0 g/cm³.

3. The armor-plating component as claimed in either of the preceding claims, wherein the silicon carbide grains with an equivalent diameter greater than or equal to 10 micrometers and less than 60 micrometers represent more than 10% by volume of said material, and preferably less than 50% by volume of said material.

4. The armor-plating component as claimed in one of the preceding claims, wherein the silicon carbide grains with an equivalent diameter less than 10 micrometers represent less than 55% by volume of said material.

5. The armor-plating component as claimed in one of the preceding claims, wherein the silicon carbide grains with an equivalent diameter greater than or equal to 60 micrometers represent less than 5% by volume of said material.

6. The armor-plating component as claimed in one of the preceding claims, comprising:
- boron carbide grains,
- a matrix binding said boron carbide grains,
- said matrix comprising at least a) a metallic silicon phase or a metallic phase comprising silicon and b) silicon carbide grains.

7. The armor-plating component as claimed in one of the preceding claims, wherein the boron carbide grains with an equivalent diameter less than or equal to 5 micrometers represent less than 10% by volume of said material.

8. The armor-plating component as claimed in one of the preceding claims, wherein the silicon carbide grains with an equivalent diameter less than 5 micrometers, in alpha (α) crystallographic form, represent at least 20%, preferably at least 25% by volume of said material.

9. The armor-plating component as claimed in one of the preceding claims, wherein the boron carbide grains with an equivalent diameter greater than 60 micrometers represent more than 15%, preferably more than 20%, and/or less than 40%, preferably less than 35%, preferably less than 30%, by volume of said material.

10. The armor-plating component as claimed in one of the preceding claims, wherein the silicon carbide content of said material is greater than 30% and/or less than 65% by volume of said material.

11. The armor-plating component as claimed in one of the preceding claims, wherein the boron carbide content is greater than 25%, preferably greater than 30%, or even greater than or equal to 35% and/or less than 60% by volume of said material.

12. The armor-plating component as claimed in one of the preceding claims, wherein the boron carbide, the silicon carbide and the metallic silicon or the metallic phase comprising silicon together represent more than 75% by volume of said material.

13. The armor-plating component as claimed in one of the preceding claims, wherein, by volume of said material:
- the silicon carbide content of said material is greater than 30% and less than 70%, more preferably is greater than 40% and less than 65%, and
- the boron carbide content is greater than 20% and less than 50%, more preferably is greater than 25% and less than 40%, and
- the content of metallic silicon or of the metallic phase comprising silicon is greater than 8% and less than 25%, more preferably is greater than 10% and less than 20%, and
- the boron carbide grains with an equivalent diameter greater than 30 micrometers represent more than 20% and less than 50%, and more preferably represent more than 25% and less than 40%, and
- the silicon carbide grains with an equivalent diameter between 10 micrometers and 60 micrometers represent more than 10% and less than 20%, and more preferably represent more than 10% and less than 19%, and
- the silicon carbide grains with an equivalent diameter less than 10 micrometers represent more than 25% and less than 60%, and more preferably represent more than 30% and less than 55%, and
- the silicon carbide grains with an equivalent diameter less than 5 micrometers represent less than 5%, and more preferably represent less than 1%,
- the boron carbide grains with an equivalent diameter greater than 60 micrometers represent more than 15% and less than 30%, and
- more than 80%, more preferably more than 90% of the grains with an equivalent diameter greater than 60 micrometers are boron carbide grains.

14. The armor-plating component as claimed in one of the preceding claims, wherein the ceramic body has a mass-to-area ratio, or surface density, measured in kg/m², of less than 100.

15. The armor-plating component as claimed in one of the preceding claims, wherein the ceramic body is chosen from a plate, a chest protector, a helmet, a bodywork element of a vehicle, or a tube.

16. The armor-plating component as claimed in one of the preceding claims, comprising a ceramic body made of a material, provided on its inner face or face opposite the impact face with an energy-dissipating back coating, made of a material of lower hardness than that of the material constituting the ceramic body, wherein the material constituting the back coating is chosen from polyethylenes PE, in particular ultra-high-density polyethylenes (UHMPE), glass or carbon fibers, aramids, metals such as aluminum, titanium or alloys thereof or steel.

17. The armor-plating component as claimed in the preceding claim, wherein the ceramic body-back coating assembly is surrounded by an envelope of a confining material.

18. The armor-plating component as claimed in the preceding claim, wherein the material constituting the envelope is chosen from polyethylenes PE, in particular ultra-high-density polyethylenes (UHMPE), glass or carbon fibers, aramids, metals such as aluminum or steel.

19. A process for manufacturing the ceramic body of the armor-plating component as claimed in one of the preceding claims, comprising the following steps:
a) preparing a starting feedstock including:
- at least one powder of boron carbide particles, of which the median diameter of the particles is between 30 micrometers and 150 micrometers,
- a first powder of silicon carbide particles, of which the median diameter of the first powder of particles is at least 1.5 times smaller than the median diameter of boron carbide grains,
- a second powder of silicon carbide particles, of which the median diameter is at least 5 times smaller than the median diameter of the first powder of silicon carbide particles,
- an aqueous solvent, in particular deionized water,
- optionally, a carbon precursor, preferably a powder of graphite or of noncrystalline or amorphous carbon,
- preferably, shaping additives,
b) shaping the starting feedstock into the form of a preform;
c) removal from the mold after setting or drying;
d) optionally, drying the preform, preferably until the residual moisture content is comprised between 0 and 0.5% by weight;
e) loading the preform, in contact with a source of silicon or a silicon alloy, preferably in solid form, into a furnace;
f) firing the preform under an inert atmosphere, preferably under argon, or under vacuum, preferably under a residual pressure of less than 20 torr, preferably at a temperature between 1450°C and 2200°C, so as to infiltrate the preform with the source of molten silicon and consolidate it.

20. A use of the armor-plating component as claimed in claims 1 to 18, as antiballistic protection for a person or for a land, sea or air vehicle or for a fixed installation such as a building, an enclosure wall, or a guard post, in particular in the form of a plate, of a tile, of a mosaic, for example in the form of hexagons or nodules, of a chest protector, of a shield, of a helmet, of a bodywork element of a vehicle, such as a door, of a seat, or of a tube.
